# EUROPEAN PATENT SPECIFICATION

(11) **EP 0 851 411 B1**
(45) Date of publication and mention of the grant of the patent: **13.10.2004**
(21) Application number: 97122699.8
(22) Date of filing: 22.12.1997
(51) Int. Cl.: G11B 5/31

(54) **Thin film magnetic head and magnetic recording/reproducing apparatus**
Dünnschicht-Magnetkopf und magnetisches Aufnahme/Wiedergabe-Gerät
Tête magnétique à film mince et appareil d'enregistrement/ reproduction magnétique

(30) Priority: 25.12.1996 JP 34494196; 25.12.1996 JP 34499596
(43) Date of publication of application: 01.07.1998
(73) Proprietor: Hitachi Global Storage Technologies Japan, Ltd., Kanagawa-ken, (JP)
(72) Inventor: Komuro, Matahiro, Hitachi-shi, Ibaraki, 317 (JP); Okada, Tomohiro, Hitachi-shi, Ibaraki, 316 (JP); Sano, Masaaki, Hitachi-shi, Ibaraki, 319-12 (JP); Fuyama, Moriaki, Hitachi-shi, Ibaraki, 316 (JP); Fukui, Hiroshi, Hitachi-shi, Ibaraki, 316 (JP); Hoshino, Katsumi, Hitachi-shi, Ibaraki, 316 (JP); Kawabe, Takashi, Hitachi-shi, Ibaraki, 319-12 (JP); Maruyama, Yohji, Iruma-shi, Saitama 358 (JP); Nakamura, Atsushi, Hachioji-shi, Tokyo 192 (JP); Hara, Miki, Kokubunji-shi, Tokyo 185 (JP); Shimizu, Noboru, Tokorozawa-shi, Saitama 359 (JP); Yoshida, Nobuo, Hitachi-shi, Ibaraki 316 (JP)
(74) Representative: Strehl Schübel-Hopf & Partner

(56) References cited:
- EP-A- 0 222 183
- EP-A- 0 678 855
- WO-A-92/16935
- US-A- 5 438 747
- PATENT ABSTRACTS OF JAPAN vol. 017, no. 491 (P-1607), 6 September 1993 & JP 05 120630 A (HITACHI LTD), 18 May 1993,

## Description

### BACKGROUND OF THE INVENTION

Present invention relates to a magnetic recording apparatus using a computer and an information processor, especially relates to a suitable new thin film magnetic head and recording reproducing separate type magnetic head and magnetic storage playback equipment.

As a storage (recording) apparatuses in an information apparatus, a semiconductor storage means and a magnetic storage means are mainly used. From the viewpoint of access time the semiconductor storage means is used for an internal storage apparatus, and from a viewpoint of large capacity and non-volatility the magnetic storage means is used for an external recording apparatus. In the present, dominant magnetic memories are a magnetic disk and a magnetic tape. In the recording media used in them, a magnetic thin film is formed on an aluminum substrate or on a resin tape. In order to write magnetic information into the recording media, a function unit having an electromagnetic converting function is used. Further, a function unit utilizing a magneto-resistance phenomenon or a giant magneto-resistance phenomenon or electromagnetic induction phenomenon is used in order to regenerate the magnetic information. These function units are installed in an output-input part called as a magnetic head.
The magnetic head and the medium are relatively moved and have function to write magnetic information in arbitrary positions on the medium, and to electrically regenerate the magnetic information as necessary. Describing by taking a magnetic disk apparatus as an example, the magnetic head is composed of a writing-in portion for writing in magnetic information and a regenerating portion. The writing-in portion is composed of a coil and magnetic poles magnetically coupled and enveloping the coil from upside and downside. The regenerating portion, a magneto-resistance effect element portion and electrodes for conducting a constant current to the magneto-resistance effect element portion and for detecting resistance change. Between the writing-in portion and the regenerating portion, there is provided a magnetic shield layer. Further, these function units are formed on a magnetic head main body through a base layer.
The electromagnetic conversion function is utilized in the recording and the magnetoresistance effect is utilized in the reproducing, and a reproducing of the magnetism information is performed by detecting the electromagnetic induction current induced in a coil established in a write department. In this case recording and a reproducing may be performed in one function part.

Performance of a storage apparatus is determined by speed at input and output operation and storage capacity, and in order to improve competitiveness of the product it is inevitable to shorten the access time and to increase the capacity. In addition to this, reduction of size of the storage apparatus becomes important from requirement to reduce weight and size of an information apparatus in recent years. In order to satisfy the requirement, it is necessary to develop a magnetic storage apparatus which can write and regenerate much magnetic information in a single recording medium.
In order to satisfy the requirement, it is necessary to increase recording density of the apparatus. In order to realize high density recording, it is necessary to make the size of magnetic domain small. This can be achieved by making width of the writing-in magnetic pole narrow and increasing frequency of writing-in current conducted in the coil 26.

In the reproducing head, resolution should be high in order to realize high recording density, and gap length and track width need to be narrow in order to make flux leak in pole tip minimum in the recording head. When the gap length and the track width become narrow, flux acidity between the pole tips decreases. In a composite head provided MR or GMR membrane in a reproducing department, a reproducing department and a recording department are combined to be applied to the recording apparatus. A lower magnetic film of the recording department is utilized as a shield membrane of the reproducing department too. Therby manufacture process is symplifyed and it can be alined on the same suspension system. Side fringe and radio frequency characteristic become a problem with a narrow track recording head, the minimum track width determined by the side fringe magnetic field of the former. The problem of the side fringe magnetic field may be prevented to some extent by notching the lowermagnetic film and forming a pedestal pole tip. It is shown in Japanese Patent Laid-open No. 7-262519 corresponding to US-A-5.438.747 that the pedestal is provided on the pole tip in order to reduce the side fringe. Moreover, high saturation magnetic moment material is provided on the pedestal pole tip layer, and second schield layer is explained as the material of low saturation moment of Permalloy. That is, the lower magnetic film is constructed with two layers of high saturation / low saturation magnetic moment. However, it is not mentioned about resistivity of the magnetic film at all. Accordingly when radio frequency recording is considered, the above invention may not be satisfied with, and the resistivity and the saturation flux density become an important matter.

Moreover, according to the above prior art, as the magnetic pole width becomes as narrow as 2.5 µm, and the frequency is raised to about 90 MHz, a storage density of 13 Gb/cm² (2 Gb/in²) may be obtained. However, when even higher density is needed, the following problem occurs, and it became clear that a higher density is not attained.

This problem includes a problem related to the manufacturing technology in narrowing the magnetic pole width, and a magnetic problem encountered by reducing the magnetic pole width. First, the problem in manufacture will be described. The magnetic pole constituting a magnetic gap generates a (leak) magnetic field which is necessary in order to permit changes in the magnetization of the recording medium. This magnetic field is determined by a magnetic parameter called magnetic coercive force of the recording medium, which must be strong in a medium suited for modern high density recording. Accordingly, the volume of the magnetic pole part should not be reduced in order to provide strong magnetic field. That is, the magnetic pole should not be too thin even if the magnetic pole width is narrowed.

The material which is generally used for magnetic poles is an Ni-Fe alloy. As for this material, reactive dry etching is difficult. Therefore, magnetic poles cannot be formed of thick films. For this reason, it is shaped in the formation of the magnetic poles, and a galvanizing method is used.
In the galvanizing method, it will be masked with regist pattern with beforeh, and Ni-Fe is grown up selectively only on the magnetic pole part that the electric pole for a galvanizing exposes out. Accordingly, in order to form minute magnetic pole pattern less than 2 µm, a regist pattern needs to be formed by a width less than 2 µm beforehand.

By the way, thickness of the mask pattern needs to be higher than a galvanizing height in order to maintain function as the masking in the galvanizing. The galvanizing masking pattern receiving constraint of height , width, is formed with an approach exposure method. However, resolution limit of this method is about 2 µm (when thickness is about 5 µm), the pattern with less than this resolution limit may not be formed (expensive manufacture method of X-rays lithography methods is not consider here). On this account there is the problem that cannot produce magnetic head for high density recording in a thing of conventional method.

In configuration of the above-mentioned magnetic head furthermore, it is widely known that a magnetic path resistance of the gap neighborhood increases when the magnetic pole width is narrowed. Therefore, as the magnetic pole width is narrowed, magnetic flux flows in the lower magnetic film from the upper magnetic film, the magnetic field which is necessary does not exist in the gap region, and a problem occurs.

Moreover, if the writing frequency is raised in order to realize high density recording, a problem arises as the writing efficiency falls. That is, an eddy current is likely to occur in the magnetic pole region, the magnetic path resistance is increased by this affect, and the writing efficiency falls.

As a cause for the eddy current to occur, at first, the magnetic gap applies only to the metal membrane, and in the next, the magnetic path may not be formed with a high resistance membrane or amorphous membrane, which induces a small eddy current. It is a common weak point of the conventional magnetic head, in which the magnetic pole is made using a galvanizing method, that the magnetic path cannot be formed with a high resistance or amorphous membrane generating a little eddy current.

WO 92/16935 discloses a thin-film magnetic head with the features included in the first part of claim 1. There, the upper and lower magnetic films are each laminated from a plurality of alternating layers of different resistivity.

EP 0 678 855 A1 discloses a magnetic storage apparatus having a recording/reproducing separate type magnetic head operating at a recording frequency of 67.5 MHz.

EP 0 222 183 A2 discloses a thin-film magnetic head having upper and lower convexly shaped magnetic films arranged on opposite sides of a non-magnetic gap layer and each formed of a plurality of layers.

JP 05 120630 A discloses a thin-film magnetic head having upper and lower magnetic films with an intervening gap layer, wherein the upper film is formed of two layers of which the one closer to the gap layer has a higher saturation flux density than the other.

### SUMMARY OF THE INVENTION

It is an object of the present invention to provide a thin film magnetic head, a recording/reproducing separate type magnetic head, and a magnetic storage apparatus, in which deterioration of recording performance in radio frequency recording is prevented.

This object is met by the magnetic head defined in claim 1, the recording/reproducing separate type magnetic head defined in claim 4, and the magnetic storage apparatus defined in claim 6.

### (Recording head)

In the recording head relating to the present invention, it is desirable as that the lower magnetic film serves as a schield membrane with a reproducing head such as MR or GMR, a gap membrane of non-magnetism is formed between the upper magnetic film and the lower magnetic film, one part of the lower magnetic film or the upper magnetic film is made with a dry process such as a suputtering method or vacuum evaporation coating, preferably resistivity more than 80 µΩ cm is provided, a flame of galvanizing membrane is formed of SiO₂, the width thereof decides a track width for recording, and the track width is less than 1.5 µm.

It is desirable that a magnetic film having high resistivity more than 80 µΩ cm is more than saturation flux density 1.5 T, the magnetic film end over/under the gap membrane is processed by RIE, and the width of a magnetic film over/under the gap membrane is arranged.

Furthermore, it is desirable that the magnitude of magnetostriction constant of a magnetic film having high resistivity more than 80 *µ* Ω cm is 1 × 10⁻⁷ or less furthermore, and the film thickness more than a part of 0.5 µm of top and bottom magnetic film is formed with high resistivity membrane. It is desirable that a part of the magnetic film of high resistivity is broader than one part of the magnetic film of the low resistivity relating to the width of the magnetic films viewed from a looming side.

According to increasing of a surface recording density , there arises a tendency as that the recording frequency of the magnetic disc unit increases, too When the recording frequency exceeds 100 MHz, the eddy current loss of the magnetic film becomes large and the recording characteristic deteriorates. When the track width is 2 µm, the gap length 0.3 µm, the saturation flux density of the magnetic film 1.0 T, the magnetic field strength becomes higher as the resistivity of the magnetic film in a radio frequency condition of 100 MHz or more becomes higher, and it becomes suitable 80 Ω cm or greater. From this calculation result, it may be understood that a membrane having high resistivity needs to be used for one part of the magnetic pole, especiallyan end of the magnetic film. Furthermore, In order to reduce noise after writing, and to reduce heat for treatment during magnetic field to add to the magnetic film in recording head manufacturing, it is preferable to make magnetostriction constant of the magnetic film 1 × 10⁻⁷ or less. Moreover, in order to make film thickness of the magnetic film thin and to prevent saturation thereof furthermore, it is preferable that the saturation flux density of the magnetic film is 1.5 T or more.

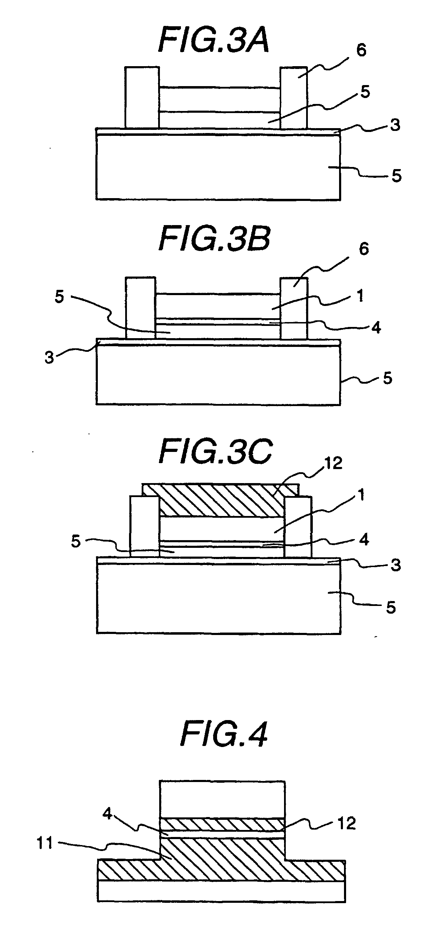

Comparing the configuration of the floating side shows in Fig. 3 with the head configuration mass-produced currently, it becomes clear that higher Bs of the magnetic film 5 and the magnetic film 1 contacted with the gap membrane 4 and higher resistivity ρ of the magnetic film 5 and the magnetic film 12 being remote from the gap membrane make a contribution to the high magnetic field gradient and the radio frequency characteristic. If all of the magnetic films mentioned above may be made with high Bs, high ρ, low lambda, low Hk and a single layer membrane, the recording head which has a high magnetic field strength and a good radio frequency characteristic is provided, however it is difficult to mass-produce a magnetic film of such a characteristic. Therefore, by making the magnetic film near the gap neighborhood high Bs and making a part or all of the magnetic pole being remote from the gap the magnetic material of high ρ, a magnetic head having a good recording characteristic may be offered using the material which can be mass-produced. It is difficult to form, with a galvanizing method, a thick (about 3 µm) membrane having high resistivity and high saturation flux density to be satisfied with these characteristic, and a membrane which consists of 3d transition metal having a small magnetostriction constant (1×10⁻⁷ or less). However, if a suputtering method is used, a magnetic film to be satisfied with these characteristic adds oxygen and nitrogen in Fe series, FeCo series or FeNiCo series, and it becomes possible to control the magnetostriction constant using other alloy element. If the suputtering method is used, an eddy current may be made small by forming with multi-layer or mixed layer film with the ferromagnetism alloying membrane of Fe series, FeCo series or FeNiCo series and with the oxide such as Al2O3 and SiO₂. It is more difficult than the case using the galvanizing method method to make these magnetic films only with the membrane made by a suputtering method and to form it with the narrow track (preferably less than 1.5 µm) furthermore, and it is more effective to make, with a galvanizing method, the part which comes in contact with the gap membrane at least (about 3 times of gap length) of the inside of the upper part magnetic film (UP) formed on the gap membrane.

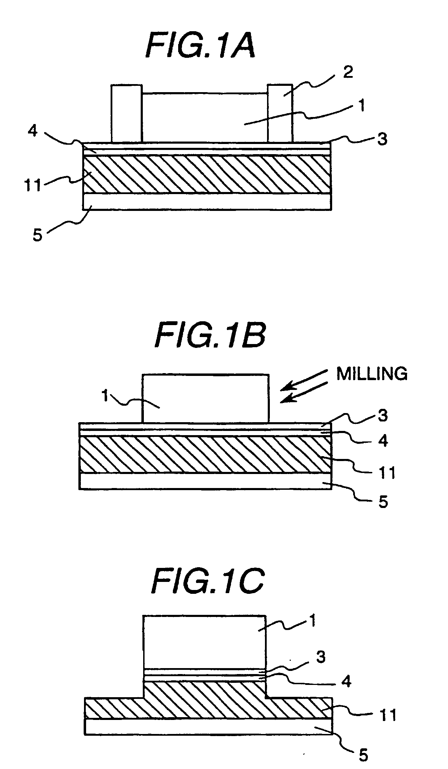

The magnetic field strength that is one of the performance of the recording head becomes higher by making a part nearest to the gap in the core into high Bs than making a remote part from the gap into high Bs. Especially, as the magnetism characteristic of magnetic film nearby the floating side of the gap influences to the performance effectively, it is effective as the recording head of a narrow track width (less than1.5 µm) to have a configuration that a part which came in contact with the gap membrane from the floating side (the gap neighborhood) is provided with high Bs, and a part except the high Bs membrane is provided with high ρ (even low Bs is good). When it was watched from floating side, the width of the magnetic film to contact with the gap membrane needs to be formed in a width corresponding to value of the track width. When the magnetic film is formed with the galvanizing method, the distance of the galvanizing flame decides the width of the galvanizing membrane namely the track width, it becomes possible to form the galvanizing membrane of 0.3-1.5 µm width.
Moreover, in the galvanizing method, Fe, Ni, Co and these binary or ternary alloying membrane are capable to be formed easily, and the membrane (CoNiFe alloying, NiFe alloying) of high Bs (1.5 T or greater) is formed too, the galvanizing membrane may be applied to one part of the magnetic core which comes in contact with the gap membrane which decided track width or may be disposed near the gap membrane. When it was constituted only from the ferromagnetism chemical element, the resistivity ρ of this galvanizing membrane is 50 *µ* Ω cm or so, and the resistivity ρ in the case of the membrane more than Bs 1.3T by adding ternary transition metal chemical element is about 60 µΩ cm and the resistivity ρ in the case of the galvanizing membrane more than Bs 0.9T by adding metalloid chemical element becomes about 100 µΩ cm. High Bs membrane is necessary for a magnetic film of 1 and 5 in Fig. 3 as mentioned above, and if the resistivity ρ of the magnetic films 12 and 5 is high value, the resistivity p of the magnetic film1 and 5 does not need to be high. That is, as volume of the magnetic pole material, the rate of the high ρ material which occupies in the volume increases than that of high Bs membrane (low ρ) material. As shown in Fig. 1, a membrane is formed by the suputtering method in one part of a lower part magnetic film 11, of high resistivity (80 µΩ cm or greater), high Bs >1.5 T, and magnetostriction constant (magnitude) <1 × 10⁻⁷, and a non-magnetic film of 0.1 to 0.2 µm is formed by a suputtering method thereon as a gap membrane 4. A foundation 3 of the galvanizing membrane is formed by the suputtering method in the addition. This foundation 3 may be formed with a high resistivity membrane. A regist flame 2 is formed on the foundation 3, and the upper part magnetic film is made with the galvanizing method. The track width is fixed with distance between the flames, and it is identified to be capable to form it without composition fluctuation to 0.5 *µ* m by a flame galvanizing method Furthermore, as a masking it with an upper part magnetic film 1, by a dry etching method such as milling or RIE (reactive etching) method, side fringe may be reduced by removing one part of the foundation 3, the gap membrane 4 and the lower part magnetic film (upper part screening membrane of MR and GMR) without re-adhesion. Film thickness of high resistivity membrane may restrain degradation of the magnetic field strength, that is to say, the recording performance in a radio frequency by forming it 0.5 to 3 times or more of the film thickness of the gap membrane. Being different from in Fig. 1, the membranes over and under the gap 4 (lower part magnetic film 5 and upper part magnetic film 1) are formed with the galvanizing method, recording performance may be raised by making high resistivity membrane with a membrane being wider and thicker than that of the lower part magnetic film 5 or the upper part magnetic film 1. For example, it becomes possible that a high resistivity membrane 12 is formed on one part of the flame and on the upper part magnetic film 1 by the suputtering method. In this case, the gap membrane is provided with an electroconductive non-magnetic film (Cr alloying etc.). Moreover flame is made of oxide such as SiO₂, the flame removal production process is not applied as shown in Fig. 1, and a manufacture method is used as that the flame is just left on floating side. Regist may be used for the galvanizing flame. Fig. 4 shows a similar configuration as that in Fig. 1, and thin high resistivity, high Bs membrane 12 is formed on gap 4 by the galvanizing method. Film thickness is a half to three times of the gap, and if the film is constructed within the thickness of this range, the effect of the high resistivity is distinctly arizen in the recording performance and the galvanizing becomes possible, too. This high resistivity galvanizing membrane 12 is a ferromagnetism alloying membrane including chemical elements such as P, B, O etc.

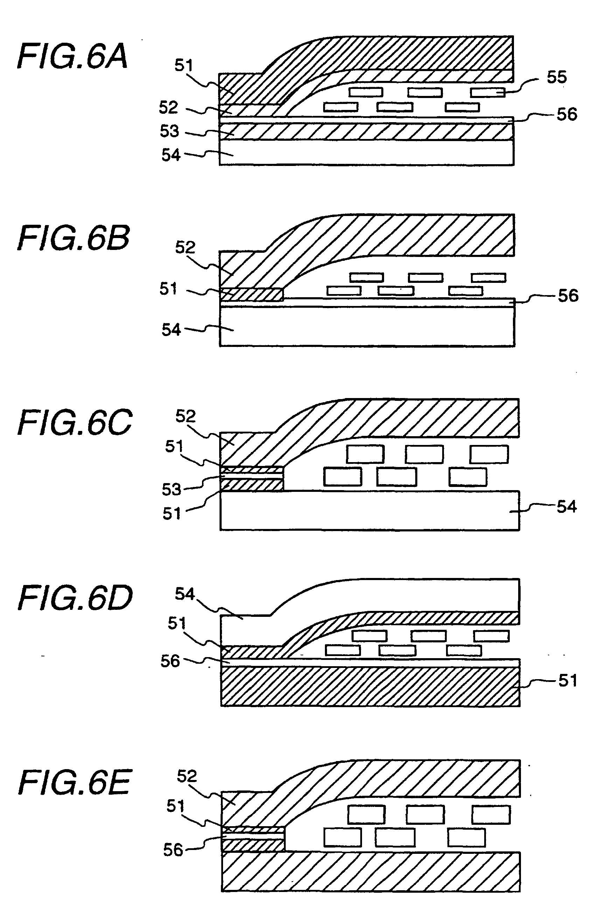

Because it is difficult that the membrane being high Bs, low Hk, high ρ, and low λ is made by these galvanizing methods, It is possible by using the suputtering method as shown in Fig. 5 to provide one part 11 of the upper part screening membrane and one part12 of the upper part magnetic film with the high resistivity membrane (80 µΩ cm or greater) .

In Fig. 5, the magnetic film 13 and the magnetic film 14 up and under the gap membrane are made with a galvanizing method. Bs of the above magnetic film 13 and 14 is higher than Bs of high resistivity membrane (one part 11 of the shielding membrane and one part of the upper part magnetic film) made by the suputtering methods. The magnetic field strength from the gap becomes high by making Bs of the magnetic film near to the gap membrane high, and the radio frequency characteristic is improved by high ρ magnetic film (11,12) made by the suputtering method. Moreover as shown in Fig. 5, it is a characteristic that the width of the magnetic film 13 and gap membrane 14 and magnetic film 14 (when it was watched from floating side) is narrower than the width of the magnetic film (11 and 12) apart from the gap membrane 14 further, thereby magnetic field gradient of the recording head capable to be made large.

Recording head in present invention is constituted to be sandwiched the magnetic film of the gap department mutually with the convex magnetic poles disposed face to face as stated above.

Relating to the magnetic pole configuration ofthe head of the magnetic core in which the above magnetic head is exposed out in a surface coming close to the recording media, the upper part magnetic pole has a convex configuration and becomes convex against the lower part magnetic pole, the lower part magnetic pole has a convex configuration and becomes convex against the upper part magnetic pole, and the convex portions of the upper part magnetic pole and the lower part magnetic pole are arranged to be face to face, and width center of the convex part of the upper part magnetic pole and width center of the convex part of the lower part magnetic pole are respectively arranged to be on a same line, and it is desirable to make the height of the convex part low compared with the width of the convex part. It is desirable to produce the recording head of the present invention by following production process.
(1) After having laminating the lower part magnetic pole material on the magnetic head foundation configuration, the insulating non-magnetic film is laminated and the material becoming the convex part constituting one part of the upper part magnetic pole is furthermore laminated.
(2) Regist pattern is formed in a domain equivalent to the convex part of the upper part magnetic pole on the above laminating configuration using a lithography method.
(3) Using the member being convex part of the upper part magnetic pole the above regist pattern as masks, the convex part is formed in the lower part magnetic pole by etching the insulating non-magnetic film and the lower part magnetic pole.
(4) After having formed the member which became a convex part by the upper part and the lower part magnetic pole, non-magnetism and insulating membrane on the entire surface is laminated, and a film having a thickness exceeding the convex part in a domain except the convexpart is laminated.
(5) By forming a remaining member constituting the upper part magnetic pole member, the upper part magnetic pole is formed to turn the convex part as a valley.
(6) non-magnetism and insulating membrane are processed to be flat, and one part of the member forming the convex part is exposed on a flat surface.
(7) The remaining member constituting the upper part magnetic pole member is formed.

### (Reproducing head)

The reproducing head in the present invention is constructed with said magnetoresistance effect type element, Soft magnetism membrane and hard magnetism membrane mutually decline 90 degree in magnetic field directions thereof, and the magnetic field of the magnetic film forming a free layer may changes 0-180 degrees from the magnetic field of the magnetic film forming a fixed layer by magnetic field from recording media.

In the present invention, a magnetic recording apparatus is used, the magnetic head of said magnetic recording apparatus is loaded the magnetoresistance effect element using huge magnetoresistance effect as a means corresponding to high recording density.

As one of the subject of the present invention is that the antiferromagnetism membrane which produces replacement coupling bias should be developped by directly laminating the magnetism membrane. As means for solving the subject of the present invention, at first, main component of the antiferromagnetism membrane is composed with chrome and manganese.

In the second, in order to improve the characteristic, by adding one chemical element of platina group, aurum, silver, copper, nickel and cobalt, or plural chemical elements chosen among them so as to increase cell constant keeping body-centered cubic structure of this configuration, size of the replacement coupling magnetic field and the temperature characteristic are improved. In the third, in order to boost size of one direction anisotropism occurring during the ferromagnetic body and the antiferromagnetic substance, composition of the ferromagnetic body is provided with cobalt or cobalt alloying comprising cobalt as a main component. Co-Fe-Ni alloying is good for the composition of the cobalt alloying when it is used as soft magnetic material,moreover, Co-Pt alloying is good when it is used as high coercive force material. In the fourth, in order to harmonize a direction of one direction anisotropism, it is heat-treated. In the fifth, especially it is effective for spin valve type magnetoresistance effect membrane. The hard magnetism layer to contact with the antiferromagnetism layer is constructed with a laminating body of the hard magnetism layer of three layers or more, or total thickness is composed to be not less than 3nm so that heat deterioration of the characteristic of the magnetoresistance effect may be prevented.

In the present invention, as the magnetic recording reproducing device uses the magnetoresistance effect element stated above in the reproducing part, high recording density namely, that is, recording wave length recorded on high recording medium becomes short, and width of recording track becomes narrow with sufficient reproducing capacity and recording may be kept well.

That is, magnetoresistance effect element in the present invention is realized a fixed bias or a longitudinal bias with the antiferromagnetic substance of chrome group alloying, or the antiferromagnetic substance of Mn group alloying and the cobalt series ferromagnetic body. Moreover, the hard magnetism layer contacted with the antiferromagnetism membrane is constituted with the laminating body of three layers or more of the hard magnetism layer, for example, Co/NiFeCr/Co, and the total thickness is provided to be in 3nm or more, preferably 3 to 20 nm. Thereby, the spin valve type magnetoresistance effect element having high resistance variation factor, large replacement coupling magnetic field, and high thermal stability is realized, and the magnetoresistance effect element having a good sensibility with reliability, the magnetic head and the magnetic recording apparatus having the high recording density may be obtained.

The reproducing head in the present invention is a magnetism sensor containing the ferromagnetic body and the antiferromagnetic substance cohering to the ferromagnetic body, and at least a part of the antiferromagnetic substance which lets one direction anisotropism appear in the ferromagnetic body consists of Cr-Mn alloying and at least a part which coheres to the antiferromagnetic substance of the ferromagnetic body consists of Co or Co alloying.

Moreover, the reproducing head in the present invention is characterized by comprising an antiferromagnetism layer contacted with either of the magnetic layer the first and the second magnetic layer of the ferromagnetic body partitioned off by the non-magnetic metal layer and the antiferromagnetism layer, wherein the magnetization direction of the first magnetic layer of the ferromagnetic body when the applied magnetic field is null, intersects to the magnetization direction of the second layer, and the magnetization direction of the second magnetic layer is fixed or not fixed, and said reproducing head in the present invention further comprises a means for letting the magnetoresistance effect element produce a current, and a means for detecting the electric resistance variation of the magnetic resistance sensor occured by a rotation of the magnetization of the first layer as a function of the detected magnetic field are provided, wherein the first and the second magnetic layer are Co or Co alloying and the antiferromagnetism layer is Cr-Mn alloying.

Said magnetoresistance effect element has a constitution of the soft magnetism layer / the non-magnetic layer / the hard magnetism layer / the antiferromagnetism layer, and a magnetoresistance effect function arises desirably as that the magnetization of the soft magnetism layer turns according to outside magnetic field, and a relative angle with the magnetization of the hard magnetism layer changes.

An alloying containing 30-70 atom % Mn is desirable for said Cr-Mn alloying, and at least one selected from Co, Ni, Cu, Ag, Au, Pt, Pd, Rh, Ru, Ir, Os and Re furthermore may includes 0.1-30 atom % by total content.

The hard magnetism layer ois constructed with the laminating body having Co or Co alloying film on both sides thereof through Co or Co alloying, or Ni alloying film, and the antiferromagnetism layer consist of Cr-Mn alloying or Cr-Mn-X alloying, wherein said X is at least one selected from the group of Co, Ni, Cu, Ag, Au, Pt, Pd, Rh, Ru, Ir, Os and Re and the total content thereof is desirably 0.1 - 30 atom %.

Furthermore, in the preferable embodiment of the present invention, said magnetic storage apparatus is actuated with an atmospheric temperature of 100 °C or more, the one direction anisotropism which occurs in the laminating constitution of the hard magnetism layer and the antiferromagnetism layer is about the same as the direction of the magnetic field occurring from the electric current flown in the magnetism sensor, and the polarization process which cools off is performed while heating by a lower temperature than the blocking temperature as that the one direction anisotropism disappears and applying the magnetic field.

In the present invention, it is desirable to be done at least of one of following matters. The saturation flux density of said second hard magnetism layer is smaller than the saturation flux density of the first and the second hard magnetism layer.

Thickness of the hard magnetism layer being 3nm to 20 nm.
The second hard magnetism layer consists of nickel 50-85 atom %, ferrum 15-20 atom %, and the remainder thereof being selected from at least one of the group of chrome, vanadium, titanium, copper, aurum, silver, platina family, tantalum, niobium, zirconium and hafnium, so as to contain 35 % or less in total, and saturation flux density is less than 0.9 Tesla.

At least one of the first and the third hard magnetism layer consists of the magnetic material having saturation flux density of 1.0 Tesla or greater containing Co as the main component

Said Cr alloying antiferromagnetism membrane has a configuration as that the crystal grating of the body-centered cubic structure or the CsCl type configuration is distorted in the range of 0.1 to 10 %.

Heat treatment makes said Cr alloying antiferromagnetism film distorted.

Said Co alloying consists of Co, Ni and Fe, and the composition thereof is Co 30 to 98 atom %, Ni 0 to 30 atom % and Fe 2 to 50 atom %, especially Co 85 to 95 atom %, Fe 5 to15 atom %, or Co 50 to 70 atom %, Ni 10 to 30 atom %, and Fe 5 to 20 atom %.

Said Co alloying is consit of Co, Ni, Fe and additional element X, and a total of Co, Ni, Fe is 70 to 98 atom %, and the X is 2 to 30 atom % and is either one or more of Cu, Cr, V, Ti, Ta, Nb, Zr, Hf and platina family.
Oxide film is formed by a heat treatment, a film formation technology or an ion inplantation etc. on said Cr alloying antiferromagnetism membrane surface.

Said means to fix the magnetization direction of the second magnetic layer of the ferromagnetic body is the second magnetic layer of the ferromagnetic body vaving the higher saturation magnetic coercive force than the first magnetic layer of the ferromagnetic body.

Said means to fix the magnetization direction of the second magnetic layer of ferromagnetic body is the antiferromagnetism layer coming in contact with the second magnetic layer of the ferromagnetic body directly.

Said means to fix the magnetization direction of the second magnetic layer of the ferromagnetic body is the hard hard magnetism layer which comes in contact with the second magnetic layer of the ferromagnetic body directly. The magnetization direction of the thin film layer of individual ferromagnetic body for a direction of the current is determined so that the anisotropism magnetic resistance is added to the electric resistance variation of the magnetoresistance effect element occurred by a rotation of the magnetization of the magnetic layer of the individual ferromagnetic body.

The magnetization direction of the thin film layer of individual ferromagnetic body for a direction of the current is determined so that the anisotropism magnetic resistance is added to the electric resistance variation of the magnetoresistance effect element occurred by a rotation of the magnetization of the first magnetic layer of the ferromagnetic body.

The means for letting the produce bias of londitudinal direction sufficient to maintain the first magnetic layer of the ferromagnetic body in the single domain condition is provided further.

The means for making the bias of the londitudinal direction occur has the antiferromagnetism layer coming in contact directly only in the end domain of the first magnetic layer of the ferromagnetic body.

The means for making the bias of the londitudinal direction occur has the hard magnetism layer coming in contact directly only in the end domain of the first magnetic layer of the ferromagnetic body.

### BRIEF DESCRIPTION OF THE DRAWINGS

Figs. 1A, 1B, 1C show illustration views which are viewed from a floating surface of the recording head which is used the high resistivity film for one part of the lower part magnetic film.
Figs. 2A, 2B show illustration views which are viewed from a floating surface of the recording head which is used the high resistivity film for one part of the upper part magnetic film.
Figs. 3A, 3B, 3C show illustration views which are viewed from a floating surface of the recording head which is used the high resistivity film for one part of the upper part magnetic film.
Fig. 4 shows a illustration view which is viewed from a floating surface of the recording head which is used the high resistivity film for one part of the upper and lower part magnetic films.
Fig. 5 shows a illustration view which is viewed from a floating surface of the recording head which is used the high resistivity film for one part of the upper and lower part magnetic films.
Figs. 6A, 6B, 6C, 6D, 6E are sectional views which are viewed perpendicularly to a floating side of the recording head which uses a high resistivity film and a high saturation flux density film for one part of the magnetic pole.
Figs. 7A, 7B, 7C, 7D are sectional views which are viewed perpendicularly to a floating side of the recording head which uses a high resistivity film for one part of the magnetic pole.
Figs. 8A, 8B are conception diagrams which show magnetic head in the present invention.
Fig. 9 is an illustration view to show a problem in a conventional magnetic head.
Fig. 10 is an illustration view to show effect of the present invention.
Fig. 11 are shematic views of the the magnetic pole configuration viewed from a sliding surface side of the conventional magnetic head.
Figs. 12A, 12B, 12C, 12D are views for showing a manufacture process for manufacturing a main part of the magnetic head in the present invention.
Fig. 13 is a view for showing a manufacture process for manufacturing a main part of the magnetic head in the present invention.
Figs. 14A, 14B show a recording reproducing head which is used the high resistivity film or the high saturation flux density film for one part of magnetic pole.
Fig. 15 is a perspective view of a magnetoresistance effect element sensitive portion of a spin valve type magnetic head relating to the present invention.
Fig. 16 is a constitution view of the spin valve film which used chrome - manganese alloying film /NiFe in the present invention.
Fig. 17 is a constitution view of the spin valve film which used chrome - manganese alloying film /Co in the present invention.
Fig. 18 is a constitution view of a spin valve magnetoresistance effect film used in the present invention.
Fig. 19 shows a magnetic disc unit using a recording reproducing head in the present invention.

### DETAILED DESCRIPTION OF THE PREFERRED EMBODIMENT

### (Embodiment 1)

Figs. 1A, 1B, 1C to Fig. 5 show the structures near recording head portions of magnetic heads seeing from a floating surface. under an upper shield film 5 there is an MR film or a GMR film which becomes a regenerating head portion. The substrate is not specially limited, but it is preferable that the substrate has a small surface roughness (smaller than 5 nm).

As shown in Figs. 1A, 1B, 1C, a film of high specific resistance (above 80 µΩ cm), Bs>1.5 T and magneto-striction (absolute value)< 1X10⁻⁷ is formed in a portion of the lower magnetic film by the sputtering method, and a non-magnetic film having a thickness of 0.1 to 0 . 2 *µ*m is formed thereon by the sputtering method to be used as the gap film 4. As a magnetic film satisfying the characteristics, a high specific resistance film can be obtained by adding oxygen or nitrogen to an Fe, an FeCo or an FeNiCo alloy and also adding an element having a strong affinity with oxygen or nitrogen at the same time.

Further, the magneto-striction constant can be controlled by adding the other alloy elements, and also depends on concentration of oxygen or nitrogen. Further, a base 3 for plated film is formed on the high specific resistance film by the sputtering method.

This base 3 may be a high specific resistance film and the film thickness is thinner than 100 nm. Resist frames 2 are formed on the base 3, and the upper magnetic film is formed by the plating method. The track width is determined by the distance between the frames, and it has been confirmed that the upper magnetic film can be manufactured in 0.5 µm thickness without composition variation through the frame plating method, and a head having a track width of 0.5 to 1.5 µm has been manufactured. A resist frame is manufactured by masking with an oxide such as SiO₂ through the RIE (reactive ion etching) method. In the frame plating method, it is an alloy film formed of the main component of Fe, NiFe, CoFe or CoNiFe having a specific resistance smaller than 60 µ Ω cm. It is possible to obtain the structure shown in Fig. 5 by forming a part of the upper magnetic film manufactured through this plating method by a high specific resistance film. Further, the side fringe can be reduced by removing the base 3 and the gap film 4 and a part of the lower magnetic film (the upper shield film of MR or GMR) without reattaching through the milling method or the RIE method with masking by the upper magnetic film 1. In a case of using the RIE method, it is possible to etching nearly vertically with masking by the upper magnetic film by optimizing the kind of gas, the gas pressure and the etching rate. By setting the film thickness of the high specific resistance film to 0.5 to 3 times as thick as the film thickness of the gap film, the recording performance at high frequency can be suppressed to be degraded. The film thickness of the upper magnetic film is 2 to 3 *µ*m, and it is difficult to form all of the upper magnetic film by a high specific resistance plated film. The reason is that the plating bath is difficult to be controlled since a plated film satisfying all the characteristics has a large film stress and consequently various kinds of additives for high resistance and an additive agent for stabilizing the plating bath are used, and that the magneto-striction is more difficult to be adjusted than in the sputtering method. However, it is possible to manufacture the recording head having a structure shown in FIG. 5 where a part of the upper magnetic film is formed of a high specific resistance film.

As shown in Figs. 3A, 3B, 3C, it is possible that the films in the upper side and in the lower side (the upper magnetic film 1 and the lower magnetic film 5) of the gap 4 are manufactured by the plating method, and the high specific resistance film 12 is manufactured on a part of the frame and on the upper magnetic film 1 by the sputtering method. In this case, the gap film is a conductive non-magnetic film (made of a Cr alloy or the like). The frame is made of an oxide such as SiO, and there is no frame removing process as shown in FIG. 1, and accordingly the frame remains on the floating surface as it is. Further, the height of the frame may be a value near the thickness of the upper magnetic film 1. The thickness of the upper magnetic film 1 and the lower magnetic film 5 is thinner than 3 times of the thickness of the gap film.

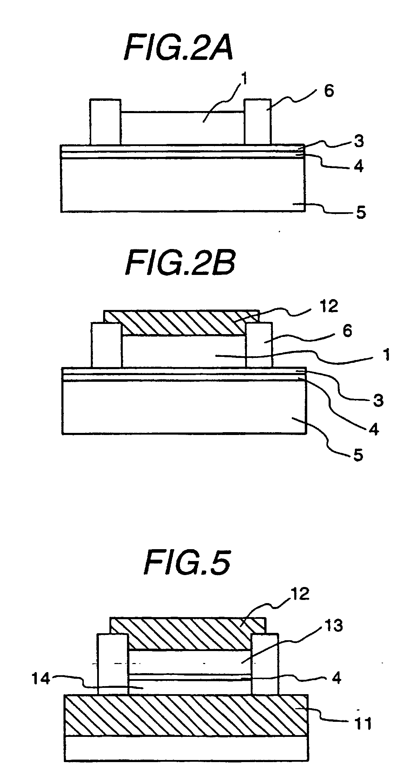

As a recording head having a similar structure to that of Figs. 3A, 3B, 3C, as shown in Figs. 2A, 2B, after forming the gap 4 and the base 3 through the sputtering method, the frame is formed by an oxide such as SiO₂, and a low specific resistance ferromagnetic film is formed as the upper magnetic film through the plating method, and further the high specific resistance film 12 is formed on a part of the frame and on the upper magnetic film 1 through the sputtering method as similar to in Figs. 3A, 3B, 3C. In this case, since the width of the lower magnetic film 5 is wider than the width of the upper magnetic film 1 (the track width), the side fringe becomes larger than in the other methods.

The structure of Fig. 4 is similar to that of Fig. 1, but a thin high specific resistance film 12 is also formed on the gap 4 by plating method. The film thickness is 0.5 to 3 times as thick as that of the gap. When the film thickness is within this range, effect of high specific resistance can clearly appear in the recording performance and it can be manufactured by the plating method. The high specific resistance plated film 12 is a ferromagnetic allot film containing elements such as P, B, O and so on. Further, as shown in FIG. 5, it is possible that a part of an upper shield film 11 and a part of the upper magnetic film 12 are formed by high specific resistance (above 80 µΩ cm) film through the sputtering method.

Fig. 5 is a configuration of the recording head looked at from the floating side, and the configuration of the surface which cuts off this head in a vertical direction from floating side is shown in Fig. 6E.

The lower part magnetic pole and the upper part magnetic pole are constructed to be a multilayer configuration, and top and bottom magnetic films 13,14 that came in contact with the gap membrane 5 may be provided by the galvanizing method.
The top and bottom magnetic film 13,14 are the membranes added 3d transition metal chemical element to NiFe alloy, CoNiFe- (Pt, Pd) alloy or alloys thereof.

The gap membrane may be made using the same frame as for the top and bottom magnetic films.

The magnetic characteristics of the top and bottom magnetic films 13, 14 are: Bs of more than 1.0 T, resistivity of less than 60 µΩcm, Hk of less than 16 A/cm (20 Oe) and magnetostriction constant (lambda) of 1 × 10⁻⁵ or less.

The thickness of the top and bottom magnetic films 13, 14 is 3 times or more that of the gap membrane, and the film thickness of the gap membrane is 0.1 µm. The gap membrane is made of non-magnetic electrically conductive material such as CrNi alloy, CuCr alloy, NiW alloy or noble metal.

The high resistivity magnetic films 11, 12 may be provided by a sputtering method, forming a laminated layer of NiFe and Al₂O₃ membrane, a mixed layer of NiFe membrane and Al₂O₃ membrane, a mixed layer of NiFeN and Al₂O₃ or a multilayer membrane of NiFeN and Al₂O₃, wherein the composition and membrane constitution thereof are controlled so that the resistivity of the membrane becomes higher than that of the top and bottom magnetic films 13, 14.

Due to the technique used for providing the multilayer or mixed layer with high resistivity, the saturation flux density of the membrane falls and becomes smaller than that of the top and bottom magnetic film made by the galvanizing method.
That is, the saturation flux density of the top and bottom magnetic film 13,14 coming in contact with the gap becomes higher than the high resistivity membrane.

In order to make the magnetic field strength on the gap of the floating side higher, the high saturation flux density membrane had better be disposed to the gap membrane neighborhood as in the embodiment stated above.

The film thickness of the high resistivity membrane 12 is about 3 µm.

Moreover, the width of the high resistivity upper part magnetic film 12 and the high resistivity lower part magnetic film 11 is larger about 0.5 to 1 µm than the membrane of the top and bottom magnetic film 13,14, and the width of the top and bottom magnetic film is about 0.5 *µ*m.

Except that flame of SiO₂ is used in the galvanizing, the regist flame is used and the regist is removed after the galvanizing, and a part except the top and bottom magnetic film 13,14 is covered with protective film (Al₂O₃ and SiO etc.), and a high resistivity hard magnetism membrane of large width is formed on the top and bottom magnetic film and the protective film.

A coil consists of two layers in Fig. 6E, however one layer is capable to be used.

A sectional view in a vertical direction of a sliding surface of the recording head is shown in Figs. 6A, 6B, 6C, 6D, 6E.

Figs. 6A, 6B, 6C, 6D, 6E respectively show sectional views corresponding to Figs.1A, 1B, 1C, Fig. 2A, 2B, Fig. 3A, 3B, 3C, Fig. 4, Fig. 5.

In Fig. 6A, the upper part magnetic film consists one layer of the magnetic film, the lower part magnetic film consists of two layers of the magnetic films, and the magnetic film near the gap membrane 56 of the lower part magnetic film is high resistivity membrane.

The coil 55 is disposed between the insulation membranes on the gap membrane 56, and the magnetic field is generated from the floating side by flowing an electric current in the coil.
In the configuration shown in Fig. 6B, the lower part magnetic film consists one layer of the magnetic film, the upper part magnetic film consists of two layers of the magnetic films, and the magnetic film near the gap membrane 56 of the upper part magnetic film is high resistivity membrane is a high saturation flux density low resistivity membrane 51.

The high saturation flux density low resistivity membrane makes it with gilt method is made by the galvanizing method and width of the magnetic film defines the track width.

The high saturation flux density low resistivity membrane is formed only by the floating side of the upper part magnetic film, and the width of the high saturation flux density low resistivity membrane viewed from the floating side is narrower than the high resistivity magnetic film 52 as to shown in Fig. 2.

The configuration shown in Fig. 6B is more suitable to construct narrow track easily than the configuration shown in Fig. 6A.

In Fig. 6C, the lower part magnetic film and the upper part magnetic film consist of two layers of the magnetic films.
The lower part magnetic film consists of the high saturation flux density low resistivity membrane 51 and the hard magnetism membrane 54 thereunder, and the upper part magnetic film consists of the high saturation flux density low resistivity membrane 51 and the high resistivity magnetic film 52.
the high saturation flux density low resistivity membrane 51 and the gap membrane 56 are made by the galvanizing method, and the high resistivity magnetic film 52 is made by the suputtering method.

In the configuration shown Fig. 6C, Fig. 6E, the saturation flux density low resistivity membrane is used on and under the gap membrane 56, the width viewed at from the floating side may be made narrower than the width of other magnetic films, it is a configuration effective for recording head having the narrow track, and the high saturation flux density membrane is used for the gap neighborhood. Therefore, the magnetic field strength becomes higher, and radio frequency characteristic is good, too as using the magnetic film of high resistivity.

Fig. 6D shows the high saturation flux density membrane 51 forming the whole magnetic pole on and under the gap membrane 56.

If only floating surface is formed to be the narrow track shown in Fig. 4, the process which only the floating side side is formed by the galvanizing method needs not to be used.

Fig. 6E shows a similar configuration as Fig. 6C, and the high saturation flux density low resistivity membrane is used to came in contact with gap membrane 56, and the high resistivity magnetic film 52 is used for the magnetic pole material apart from and over and under the gap, and the radio frequency characteristic thereof is excellent, and the track width is capable to be less than 1.0 *µ*m.

In respective Fig. 6A, Fig. 6B, Fig. 6C, Fig. 6D, Fig. 6E, the high saturation flux density low resistivity membrane 51 has higher saturation flux density than that of the magnetic pole material used for other parts in each recording head, and the resistivity thereof is smaller than that of the material of other magnetic pole parts.

As the material used for the high saturation flux density low resistivity membrane 51, for example, CoNiFe alloying, NiFe alloying or the material which added 3d transition metal chemical element in these alloying are used.

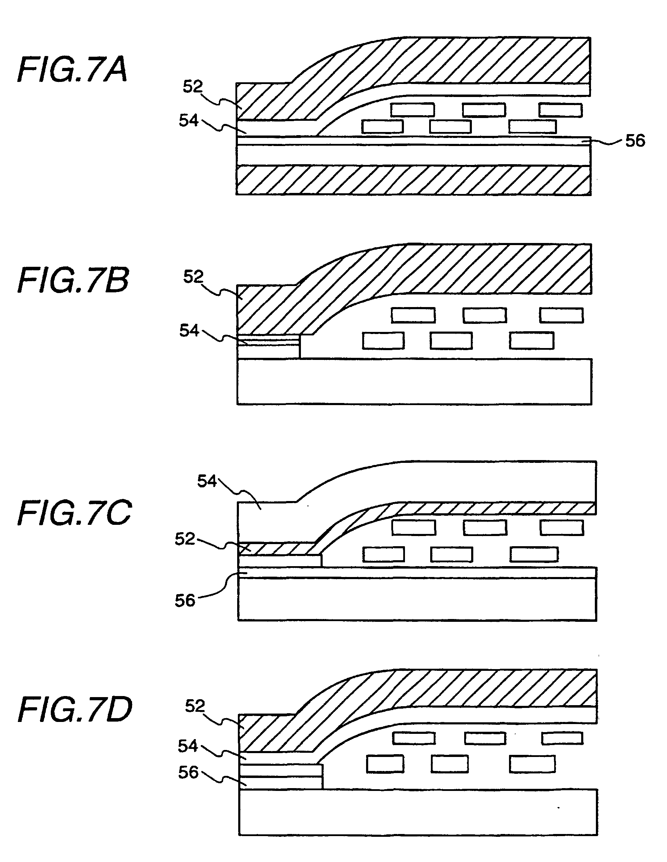

As the gap membrane 56, the non-magnetic electrical conduction membrane when making it by galvanising method, oxide such as Al₂O₃ or SiO₂ when making it by other methods, or even nitride, carbide or any mixing material thereof may be used.
Configuration examples of the recording head which is similar to the configurations of Fig. 6A, Fig. 6B, Fig. 6C, Fig. 6D, Fig. 6D are shown in , Fig. 7B, Fig. 7C, Fig. 7D.

In Fig. 7A, a magnetic film is provided on and under the gap membrane 56 and apart therefrom as the high resistivity magnetic film 52, the hard magnetism membrane 54 having smaller resistivity than that of the high resistivity magnetic film 52 is disposed in the magnetic gap side.

The volume of the high resistivity magnetic film 52 is larger than the volume of the hard magnetism membrane 54 having the low resistivity, and the radio frequency characteristic is improved than that in the case that there is not using the high resistivity membrane.

In Fig. 7B, the magnetic film which cames in contact with a gap membrane and other gap membrane is formed with the narrow track,and the magnetic film thereon is constructed with the high resistivity magnetic film 52, thereby good recording head of narrow track and radio frequency characteristic may be offered.
In Fig. 7C, the upper part magnetic film consists three layers, the gap membrane 56 is made at a flat part, the magnetic film that width is narrow is provided thereon, and the high resistivity magnetic film 52 is formed through the magnetic film.

The hard magnetism membrane 54 having the low resistivity is provided on the high resistivity magnetic film 52, the magnetic field strength of the floating side is capable to be high by making the saturation flux density of the hard magnetism membrane 54 having this low resistivity, higher.

The configuration resembled to Fig. 7C is a recording head shown in Fig. 7D, and the upper part magnetic films consists of the three laiyers the hard magnetism membrane 54 of the low resistivity is provided on a part near the gap membrane 56 and the high resistivity magnetic film 52 is provided on a part being far from the gap membrane, thereby the saturation flux density of the material of the gap neighborhood is capable to be higher than that in Fig. 7C, and the head that the magnetic field strength is high may be offered.

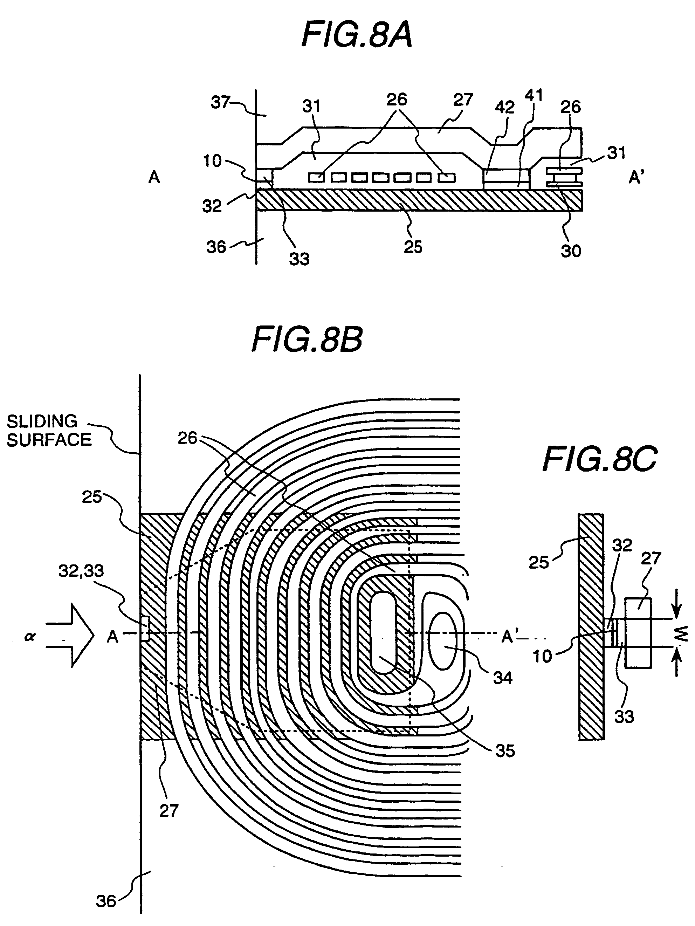

Fig. 8 A shows a section of the magnetic head having new configuration in the present invention.

A coil 26 is provided between the lower part core 25 and the upper part core 27, and consists of Al or Cu of thickness 2 *µ*m.

An insulating material 31 of the non-magnetism is filled up with an object to maintain the electric insulation with the coil 26 and cores 25,27.

A coil 26 is enveloped between the lower core 25 and the upper core 27. The coil 26 is formed of an Al or Cu film having thickness of 2 µm. A non-magnetic and insulating material 31 is filled between the coil 26 and the cores 25, 27 to electrically insulate between them.

The magnetic head in accordance with the present invention is characterized by that magnetic pole members 32, 33 and an insulating and non-magnetic film 10 are inserted between the upper core 27 and the lower core 25, and a magnetic gap (or recording gap) is formed by these members. Further, another characteristic point is that magnetic path members 41, 42 are provided between the upper core 27 and the lower core 25. This structure is not a necessary structure to realize the present invention. The magnetic path members 41, 42 are preferable to flatten the upper core 27, and have an effect to reduce stress (magneto-striction) remaining after manufacturing. By forming the members together with the magnetic pole members 32, 33, increase in manufacturing cost can be prevented.

Fig. 8B is a view showing the magnetic head seeing from the upper core side. It can be understood that the coil 26 is wound in a spiral shape. The coil 26 is connected to an electrode 30 (Fig. 8A) in a contact hall 34. Further, the upper core 27 and the lower core 25 are connected in a magnetic contact hall 35. The magnetic contact hall 35 is constructed including the magnetic path members 41, 42 described above.

The insulating and non-magnetic film 10 characterized by the present invention is placed at a position in the ends of the upper core 27 and the lower core 25, and the structure of the members seeing from the direction α is as shown by the Fig. 8C. That is, the magnetic pole members 32, 33 having a narrow width are interposed between the upper core 27 and the lower core 25, and further the insulator non-magnetic film 10 is placed between the members. The magnetic pole members 32, 33 are magnetically integrated with the ends of the magnetic poles of the upper core 27 and the lower core 25, respectively. Therefore, the gap portion is formed by the magnetic poles respectively having the projecting portion.

Further, Fig. 8C agrees with the magnetic pole structure seeing from a plane of the magnetic head accessing to the recording medium, and it can be understood from the figure that the upper magnetic pole has a projecting shape and the projecting portion is formed toward the lower magnetic pole.

Further, from Fig. 8C, it can be understood that both of the magnetic poles have a projecting shape, and particularly the width of the projecting portion of the upper magnetic pole is nearly equal to the width of the projecting portion of the lower magnetic pole.

Furthermore, in the case of the present invention, the height of the projecting portion is set to approximately 0.8 µm, and the width of the projecting portion is set to approximately 1 µm. From this relationship, the height of the projecting portion is lower than the width of the projecting portion.

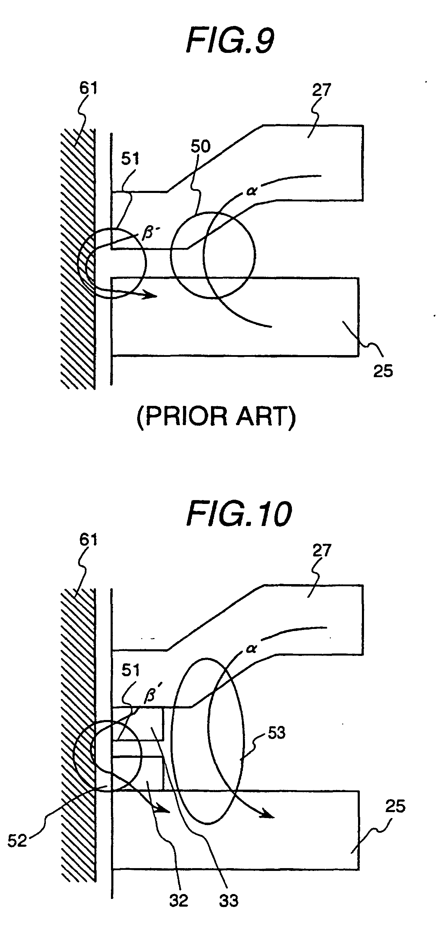

The structure disclosed by the present invention can be reduced the resistance of the magnetic path as the same as that of Japanese Patent Application Laid-Open No.7-296328. Description will be made, referring to Fig. 9. The figure is a cross-sectional view of a conventional magnetic head which does not have the magnetic pole members 32, 33. The figure shows the magnetic gap put between the lower core 25 and the upper core 27. Writing-in magnetic flux to a medium 61 is conducted as a path indicated by β. However, when the width of the gap (magnetic pole width) of the end side of the upper core 27 is narrowed, the magnetic path resistance is increased and by this effect the magnetic flux becomes to flow through a path indicated by α in a region 50 where the magnetic path resistance is increased. Thereby, an amount of the magnetic flux conducted to the gap end portion 51 is decreased and a necessary amount of magnetic flux cannot be extracted from the gap (magnetic pole) ends.

On the other hand, in a case of the magnetic head having the magnetic pole members 32, 33 shown in Fig. 10, there are the magnetic pole members 32, 33 between the upper core 27 and the lower core 25. Therefore, the path α can be increased by thickness of the members (the non-magnetic region can be widened). By this effect, it is possible to suppress the amount of magnetic flux flowing through the path α even if the magnetic path resistance is increased by narrowing the width of the magnetic poles.

The above-mentioned effect can be observed in a writing-in frequency above 150 MHz. This is an effect of the present invention obtained by using the insulator non-magnetic film in the magnetic gap. Further, in a case where an amorphous high electric resistance magnetic film such as CoTaZr or the like is used for the magnetic pole material, the writing-in frequency can be increased up to 200 MHz.

In the structure disclosed in Japanese Patent Application Laid-Open No.7-296328, since the trench structure forming the projecting portions is made of a low electric resistance material, eddy current is easily generated in this portion and accordingly the upper limit of the writing-in frequency is limited to 100 MHz.

As shown in Fig. 8C, the width w1 of the magnetic pole members 32, 33 is narrower than the width of the upper magnetic pole 27 and the width of the lower magnetic pole 25. This is the base that the magnetic pole has the projecting portion. By the effect of this shape, it is no need to say that the magnetic flux is concentrated in the projecting portions opposite to each other. Therefore, under a condition that the magnetic field from the projecting portion is adjusted so as to agree with the magnetic field necessary writing-in by adjusting the coil current (writing-in current), writing cannot occur in the region except for the projecting portion (in the region where the gap dimension becomes wide). Therefore, track width to be written can be brought to agree with the width of the projecting portion.

Further, in the present invention, only the projecting portions may be made of a high electric resistance and high saturation magnetizing material, and thereby a strong magnetic field can be generate in the region corresponding to the width of the projecting portion. By this effect, the writing-in track width can be efficiently limited to the width of the projecting portion even if the magnetic pole has the projecting shape.

Further, since the height of the projecting portion is lower than the width of the projecting portion, the width of the projecting portion can be made smaller than 2 µm by a process to be described later. By this effect, the width of writing in a medium can be easily reduced to 2 *µ*m or smaller.

Furthermore, in the case of the present invention, since the width of writing-in is determined by the width of the projecting portion, there is no need to particularly narrow the width of the upper core 27 and the width of the lower core 25 in order to realize high density recording. By this effect, the necessary magnetic field can be efficiently conducted to the magnetic pole end portion (the gap portion) without increasing the magnetic path resistance.

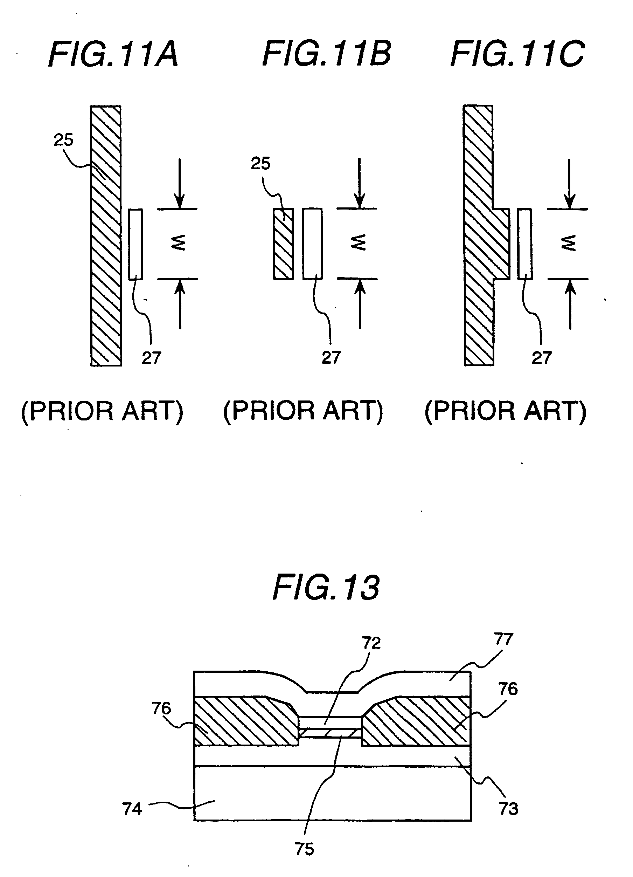

In the case of the conventional magnetic head using an insulator non-magnetic film in the magnetic gap, the shapes of the magnetic heads can be roughly classified into three kinds as shown in Fig. 11 when the magnetic poles are seen from the sliding surface side. That is, they are a magnetic head constructed by magnetic poles 27, 25 having different length as shown by Fig. 11A, a magnetic head constructed by magnetic poles 27, 25 having the same length as shown by Fig. 11B, and a magnetic head having a projection in one of the magnetic poles 25. The magnetic head Fig. 11B is an improved one of the magnetic structure of Fig. 11B, and has a characteristic of small magnetic field leakage in the track width direction since the lengths of the magnetic poles are equal to each other. Therefore, it is advantageous in writing for a narrow track. However, this structure has a disadvantage in that the magnetic pole 25 cannot be also used as a shield layer to a magneto-resistance effect element. A countermeasure of the disadvantage is the structure shown in Fig. 11C.

In order to realize the narrow track in the structure shown in Fig. 11C, the width W needs to be narrowed. Therefore, the writing-in magnetic flux is decreased due to increase of the magnetic path resistance shown in Fig. 9. Accordingly, it is impossible to write high density information at a high efficiency.

Since in the structure in accordance with the present invention the width of the writing-in gap portion is limited by the width of the projection portion, spreading of the leakage magnetic field toward the track width direction is small as similar to in the magnetic poles shown in Fig. 11B. Therefore, the structure in accordance with the present invention is suitable for high density recording. Further, since the width of the lower core is wider than the width of the projecting portion, there is no problem in that the lower core is also used as a shield layer to a magneto-resistance effect element.

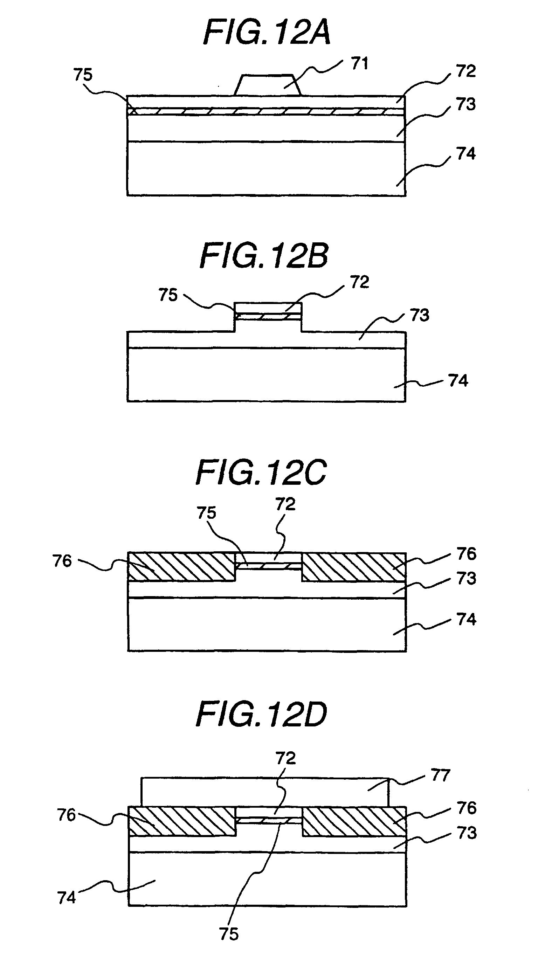

As having been described above, the magnetic head structure in accordance with the present invention has no problems in connection to high density recording which are problems in the conventional magnetic head. A manufacturing process of the magnetic head capable of realizing the excellent performance will be described below, referring to Fig. 12.

The figure shows features of forming the end of magnetic pole of the magnetic core seeing from the direction "α" shown in Fig. 8B. The processes will be sequentially described below, referring to the figure.

In the process shown in Fig. 12A, a magnetic film 73 composing the lower magnetic pole is laminated on a substrate (or a base layer or a base structure) 74. As the magnetic film, a Ni-Fe alloy is used. The thickness is set to 2 µm. On the magnetic film 73, an alumina film 72 having a thickness of 0.3 µm as an insulator non-magnetic film is laminated and further a Ni-Fe magnetic alloy film 72 having a thickness of 0.8 µm is laminated. After completion of laminating, a resist pattern 71 having a width of the projecting portion (corresponding to the writing-in track width) is formed through a photolithographic method. The thickness is set to 1 *µ*m.

Next, in the process shown in Fig. 12B, the magnetic alloy film 72 is etched by an ion milling method with masking of the resist pattern 71 to form a portion to be formed in the projecting portion of the upper magnetic pole. Then, the alumina film is etched by a chlorine and fluorine reactive gas with masking of the resist pattern 71 and the projecting portion of the upper magnetic pole formed by the etching. After that, a projecting portion is formed in the lower magnetic pole by etching the lower magnetic pole through the ion milling method with masking of the member to be formed in the projecting portion of the upper magnetic pole. In that time, the depth of the etching is set to 0.8 µm. By etching the lower magnetic pole through the ion milling method with masking of the member to be formed in the projecting portion of the upper magnetic pole, it is possible to form the projecting portions having the same length opposite to each other. This is effective to lessen spreading of the leakage magnetic field in the track width direction, and is an important element for functioning the present invention.

In the process shown in Fig. 12C, after laminating a non-magnetic and insulating film 76 all over the surface, the laminated non-magnetic and insulating film is flattened and a part of the member 72 to form the projecting portion is exposed. This process can be realized by applying a fluid thermo-curing insulator used in manufacturing of semiconductors (so-called spin-on-glass), and performing the necessary heat treatment, and then mechanically lapping the surface of the substrate. As the other method, it is possible to use thermo-fluidity of the resist.

It is a necessary condition for realizing the present invention that the member 72 to form the projecting portion is exposed from the insulator layer. If a process can realize the necessary condition, the flattening process of the insulator layer is not required. For example, even if the thickness of the insulator member 76 exceeds the thickness of the member 72 to be formed in the projecting portion, it has been confirmed that the present invention is not affected. In such an extreme case (a condition where the thickness of the insulator member 76 exceeds the thickness of the member 72 to be formed in the projecting portion), an undulation is produced in the upper magnetic pole and it results in that the projecting portion exists in the depressed portion. This structure is to be described in another part.

In the last process shown in Fig. 12D, the other members composing the upper magnetic pole member is formed. A Ni-Fe alloy film is used for the upper magnetic pole as the same as in the conventional magnetic head.

By the processes described above, the magnetic structure shown in Fig. 8C can be formed. Although the NI-Fe alloy film is used for the material for the magnetic pole in this embodiment, the magnetic head in accordance with the present invention can be formed by using the other soft magnetic film through the same process as in this embodiment. Particularly, by using a high electric resistant soft magnetic film, writing-in under a high frequency condition can be realized. It is a characteristic of the present invention that the soft magnetic film can be formed depending on the eletroplating method, and by this effect it is possible to perform writing at a high frequency exceeding that of the conventional magnetic head.

A structure of the upper magnetic pole having a depressed portion will be described below. The structure can be manufactured through processes of manufacturing a magnetic head including at least the following process. Description will be made, referring to Fig. 12 as similar to the previous explanation.

As shown in Fig. 12A, after laminating a lower magnetic material 73 on a base structure 74 of the magnetic head, an insulator non-magnetic film 75 is laminated and further a material 72 composing a part of the upper magnetic pole is laminated.

Then, a resist pattern 71 is formed in a region corresponding to the projecting portion of the upper magnetic pole through a lithographic method.

Then, as shown in Fig. 12B, a projecting portion is formed in the lower magnetic pole by etching the insulator non-magnetic film and the lower magnetic pole with masking of the resist pattern 71 and the member to be formed in the projecting portion of the upper magnetic pole.

After that, as shown in Fig. 12C, after forming members to be formed in the projecting portions in the upper and the lower magnetic poles, a non-magnetic and insulating film 76 with a thickness exceeding the projecting portion is laminated over the region except for the projecting portion. Although the figure shows that the surface of the insulator non-magnetic film 76 and the surface of the projecting portion (the surface of 72) seem to be in the same level, in this embodiment the thickness of the insulator non-magnetic film 76 exceeds the surface of the projecting portion (the surface of 72).

Then, by forming the other members 77 remaining part of the upper magnetic pole member as shown in Fig. 12D, the objective magnetic pole shape of the magnetic head is manufactured.

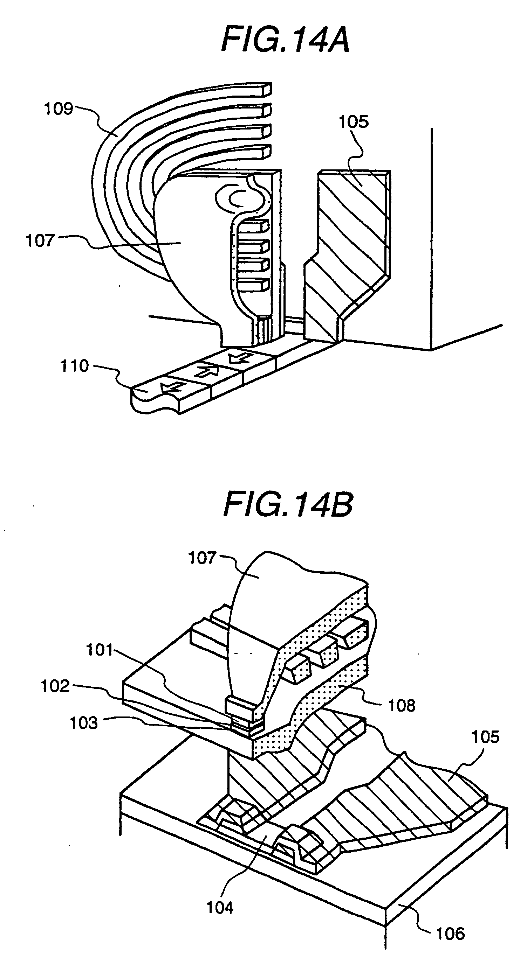

Fig. 13 shows the magnetic pole shape of the magnetic head manufactured through the manufacturing processes including at least the above-mentioned process. The figure clearly shows the shape of the upper magnetic pole 77 having the projecting portion in the depressed portion.

It should be added to describe that this shape is highly efficient for efficiently conducting the magnetic flux of the upper magnetic pole into the projecting portion.

The magnetic head in accordance with the present invention is formed on a wafer obtained by machining a sintered body of alumina and titanium carbide. Then, after performing desired machining, a magnetic head slider is manufactured.

According to the above-mentioned processes, the width of the projecting portion determining the writing-in track width is determined by the width of the resist pattern. However, by making the height of the magnetic pole projecting portion of the present invention lower than the width of the projecting portion, a resist pattern having a thick film thickness is not always necessary. From this effect, patterning resolution is easier compared to the resist pattern of a plating mask pattern, and the width of the projecting portion can be made smaller than 2 µm. By this characteristic, a magnetic head used for narrow track can be easily manufactured.

By employing a head slider composed of the magnetic head, it is possible to attain high density recording of a track width smaller than 2 µm. By this effect, it is possible to realize a high density magnetic recording apparatus of 32 Gb/cm² (5 Gb/in²) or more, which has been thought impossible to be realized. This results from the fact that the magnetic flux can be efficiently conducted up to the end portion of the magnetic pole, and the effect is produced by forming the ends of the magnetic poles with the projecting portions.

### (Embodiment 2)

Fig. 14 shows an example of a recording/reproducing head in which the high resistivity membrane as shown in the Embodiment 1 is used for the recording head and the recording head is combined with a reproducing head as shown in the following.

A huge magnetoresistance effect membrane 104 is used for the reproducing head, which is electrically contacted by an electrode 105 so that an electric current can flow.

There is provided a lower part shielding membrane 106 through the lower part gap membrane under electrode 105 and the huge magnetoresistance effect membrane 104.

A high resistivity lower part magnetic film 108 is disposed as the upper part shielding membrane through the upper part gap membrane on the huge magnetoresistance effect membrane 104, and the high resistivity lower part magnetic film 108 consists of one part of the lower part magnetic pole of the recording head.

By constituting one part of this high resistivity lower part magnetic film 108 with the high resistivity membrane, the radio frequency characteristic of the recording head may be improved.

The width of the gap membrane 102 of recording head is equal to that of the magnetic films disposed on and under the addition, and the high saturation flux density membranes 101,103 on and under the gap are desirable to be constructed with a material of higher saturation flux density than that of other magnetic pole parts.

A high resistivity upper part magnetic film 107 having a larger width is used on this high saturation flux density membrane 101.

An electric current is flown in the coil 109 of the recording head, and the recording media 110 is recorded by a magnetic field from the recording head.
In addition to above, a head of the different configuration used to a hard magnetism tunnel membrane may be used for the reproducing head.

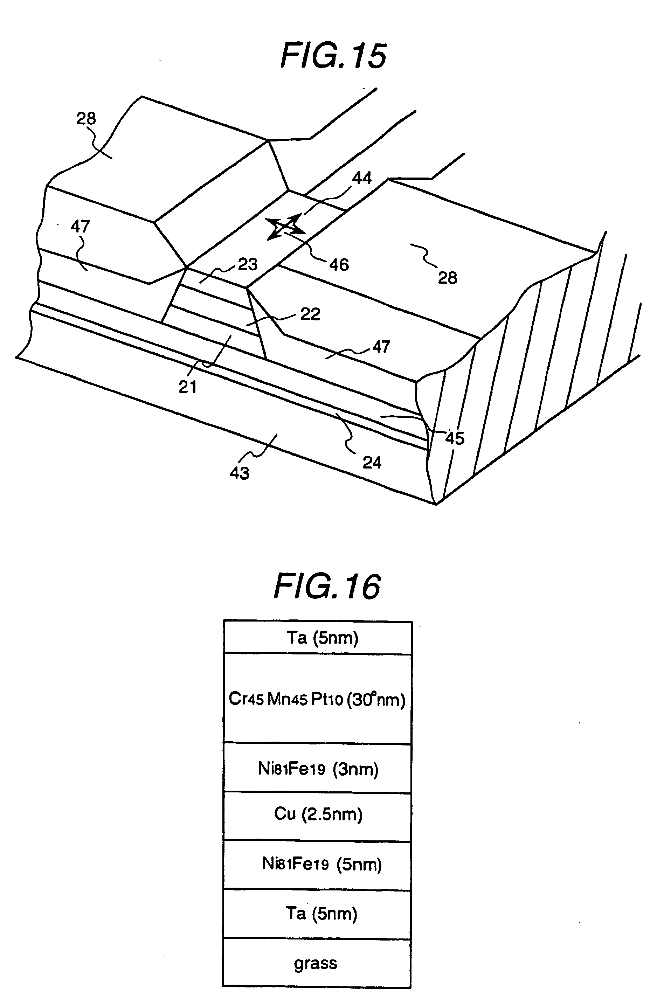

Fig. 15 is a partial sectional view of the magnetic head (MR sensor) using a spin valve magnetoresistance effect membrane in the present invention.

MR sensor in the present invention has a configuration which sticks the second magnetic layer 22 of first magnetic layer 45 of soft ferromagnetic body, non-magnetic metal layer 21 and ferromagnetic body, on an appropriate substrate 43 as glass or ceramic.

In the yhard magnetism layer 45 and 22, individual magnetization directions thereof become to cross with about 90 degrees angle differential when the magnetic field is not applied.

Magnetization direction of the second magnetic layer 22 is fixed to the same direction as a magnetic field direction of the magnetic media.

The magnetization direction of the first magnetic layer 45 of the soft ferromagnetic body when the magnetic field is not applied inclines 90 degrees to the magnetic field direction of the second magnetic layer.

A magnetization rotation occurs with the first magnetic layer 45 responding to the applied magnetic field.

The first magnetic layer 45, the non-magnetic metal layer 21, the second magnetic layer 22 and the antiferromagnetic substance layer 23 explained in the embodiment of the present invention are capable to use a membrane constitution as the laminating configuration shown by later Fig. 16, Fig. 17 and Fig. 18, and moreover as the hard magnetism layer 47, Co₈₂ Cr₉ Pt₉, Co₈₀ Cr₈ Pt₉(ZrO₂)₃ may be used.

These Fig. 16, Fig. 17 and Fig. 18 show the first magnetic layer 45 in this embodiment and a membrane constitution equivalent to the second magnetic layer 22 and those magnetic field directions are formed same as the said article.
Before adhering the first magnetic layer 45 of the soft ferromagnetic body in this embodiment, an appropriate lower part membrane 24, for example, such as Ta, Ru or CrV is stuck on a substrate 43.

An object to stick the lower part membrane 24 is in optimizing formation, grain size number and a form of the layer stuck later.

The form of the layer is very important to get suitable MR effect.
Furthermore, it is because the a very thin distance piece layer of the non-magnetic metal layer 21 may be utilized by the formation of the layer.

In order to make affection by a branch minimum furthermore, a high electric resistance is preferable to be used as the lower part layer.

The lower part layer may be used as a reverse configuration as mentioned above.

Substrate 43 is made of a sufficient high electric resistance and a plane fully and in case of appropriate crystal structure, the lower part membrane 24 is unnecessary.

As the first magnetic layer 45, means for producing a bias in a londitudinal direction is used in order to maintain a single domain condition in a direction to be parallel to this page.
As the means for producing the bias in the londitudinal direction, a rigid hard magnetism layer 47 having characteristics of high saturation coercive force, high right angle degree, high electric resistance is used as well.
The rigid hard magnetism layer 47 contacts with a domain of an end of the first magnetic layer 45 made of the soft ferromagnetic body.

Magnetization direction of the rigid hard magnetism layer 47 is parallel to this page.

The first antiferromagnetism layer contacts with the domain of the end of the magnetic layer 45 so as to be stuck, and a necessary bias in a londitudinal direction occurs.

The antiferromagnetism layer is preferrable to have a blocking temperature which is sufficientry different from that of an antiferromagnetism layer 23 which is used in order to fix the magnetization direction of the second magnetic layer 22 made of the ferromagnetic body.

Next, a capping layer made of high resistance material such as Ta, for example, is desirable to be stuck on all of the upper part of the MR sensor. An electrode 28 is provided, and a circuitry is formed between the MR sensor structure, the current source and the detection means.

Fig. 16 to Fig. 18 respectively show a membrane constituting a magnetoresistance effect element instead of each membrane of the non-magnetic metal layer 21, the second magnetic layer 22 and the antiferromagnetic substance layer 23 shown in Fig. 15, and it is formed by a radio frequency magnetron sputtering apparatus as follows.

In an Ar atmosphere of 0.4 Pa (3 mTorr), the following materials are successively laminated on a ceramics substrate having a thickness 1 mm and a diameter of 75 mm (3 inches).

As a sputtering target, tantalum, nickel -20 at% iron alloy, copper, cobalt, chromium -50 at% manganese are used.

In order to manufacture a chromium-manganese alloy membrane, chips of 1 cm × 1 cm of an additional element are arranged on a chromium-manganese target top, and the number of chips is increased or decreased so as to adjust the composition thereof.

Moreover, when a Co-Fe-Ni layer is used for the hard magnetic membrane, a chip of 1 cm × 1 cm of nickel, iron is arranged on the cobalt target top to adjust the composition.

The layers of the laminating film are formed successively by generating plasma in the apparatus by applying radio frequency electric power to the cathode holding each target, and a shutter is opened and shut for every cathode.

In the film formation, applying a magnetic field of about 24 A/cm (30 Oe) in parallel to the substrate by using a permanent magnet one-axis anisotropy is provided, and the direction of the replacement coupling magnetic field of the chromium-manganese film is guided to the direction of the applied magnetic field. An example of the formation condition stated above is shown in the following Table.

**[ Table ]**

| **Layer** | **Ar gas pressure** | **rf output** | **Forming speed** |
|---|---|---|---|
| Ta: | 0.01 Pa (0.8 m Torr) | 300 W | 0.25 nm/s |
| NiFe: | 0.4 Pa (3 m Torr) | 350 W | 0.17 nm/s |
| Cu: | 0.4 Pa (3 m Torr) | 150 W | 0.2 nm/s |
| CrMnPt: | 1 Pa (8 m Torr) | 350 W | 0.5 nm/s |
| Co: | 0.4 Pa (3 m Torr) | 250 W | 0.13 nm/s |

The laminated film is heat-treated in a vacuum thermal treatment equipment after being formed.

The heat treatment is performed by raising the temperature from room temperature to a predetermined temperature, for example 250 °C, and after holding the temperature for a predetermined time, for example one hour, cooling down to room temperature.

In the total process of temperature raising, holding and cooling, a magnetic field from 1,6 to 4 kA/cm (2 to 5 kOe) is applied in parallel to the surface of the substrate.

The direction of the above magnetic field is parallel to the magnetic field applied by the permanent magnet when forming the film.

The formation of the element on the substrate is performed by a photo resist production process.

After that, the substrate is processed to form a slider which is placed in the magnetic recording apparatus.

Fig. 16 is a figure comparing characteristics before and after the heat treatment of the spin valve film which has a magnetic laminating body using an antiferromagnetic film of 45 at% chromium -45 at% manganese -10 at% platina/81 at % Ni-19 at % Fe film.

The coupling magnetic field of one-direction anisotropy appears as a shift quantity of a right side loop of the figure.

The coupling magnetic field before heat treatment is 240 A/cm (300 Oe), 250 °C, and 300 A/cm (380 Oe) after the heat treatment of three hours.

The thickness of Ni Fe layer and the size of the magnetization are the same as in the prior art.

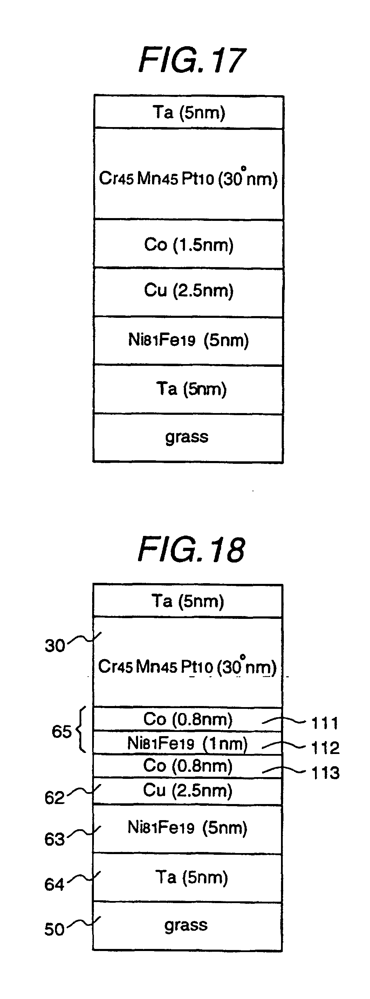

Fig. 17 is a figure comparing characteristics before and after the heat treatment of the spin valve film which has a magnetic laminated body using an antiferromagnetic film of 45 at% chromium -45 at% manganese -10 at% platina/ Co film.

The coupling magnetic field before the heat treatment is almost similar to that in the case shown in Fig. 1 with 240 A/cm (300 Oe). After the heat treatment for three hours in 250 °C, the coupling magnetic field becomes 480 A/cm (600 Oe), about two times than before.

Considering the thickness of the Co layer and the size of the magnetization, it is size of about two times of the coupling magnetic field shown by Fig. 1.

Fig. 18 is another example of the present invention using a magnetic laminating body as the spin valve magnetoresistance effect film,

The antiferromagnetic film 30 (45 at% Cr-45 at% Mn-10 at% Pt) and the hard magnetic layer 65 sticking thereto respectively consist of a Co layer 111 directly connected to the antiferromagnetic film 30, the soft magnetism layer 112 having a good magnetism characteristic (81 at % Ni-19 at % Fe), and a Co layer 113 directly contacting with the non-magnetic layer 62 (Cu) and producing huge magnetoresistance effect.
A foundation film 64 is the foundation layer for controlling orientation and crystal grain size of other film, and a soft magnetism layer 63 (81 at % Ni-19 at % Fe) is a free layer.

The Co layer is arranged at a joint portion with the antiferromagnetism film and a jointportion with the non-magnetic film, however the magnetism characteristic of the hard magnetism layer 65 as the fixed layer is not deteriorated, and thickness and characteristic of the hard magnetism layer 65 may be held without increasing the magnetization quantity of the total layer.

Accordingly, the soft magnetism layer 112 is desirable to have a good magnetism characteristic and to have a smaller saturation flux density than those of the layers 113 and 111 consisting of Co, for example, Ni 81 Fe 19 film of the saturation flux density of 1 Tesla.

Furthermore, the saturation flux density may be fallen to be even 0.5 Tesla or so, and for example, NiFe-Cr film is suitable, too, this NiFe-Cr film consists of NiFe alloying containing 0 to 20 at % Cr, and this NiFe alloying consists of 75-95 at % Ni and remainder Fe.

### (Embodiment 3)

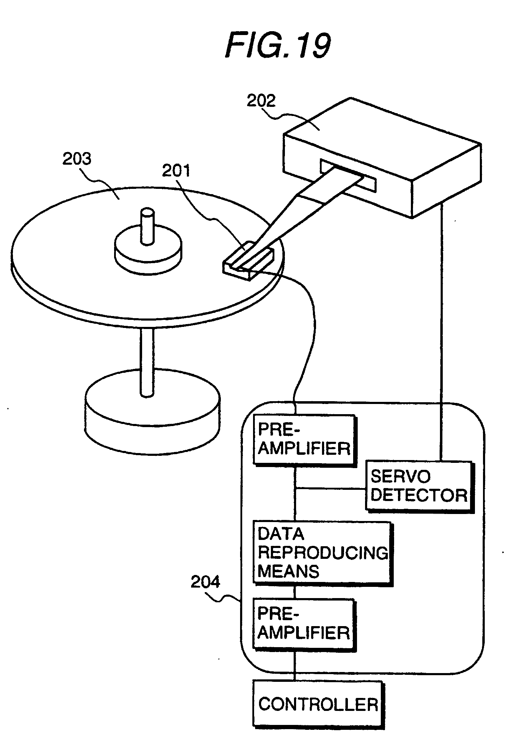

Fig. 19 shows the total magnetic disc unit using the recording/reproducing sectional pattern head of embodiment 2.

The recording/reproducing separating type magnetic head 201 is controlled by a head positioning frame 202 as to its location on a magnetic disk 203 rotated by a motor, and is connected to a regenerative signal processor 204.

This apparatus consists of a DC motor for turning the magnetic disk, a magnetic head to write and read information, a positioning apparatus, that is an actuator and voice coil motor, to support the magnetic head and to change its location on the magnetic disk, and an air filter to keep the inside apparatus clean.

The actuator consists of a carriage, a rail, and a bearing, and the voice coil motor consists of a voice coil and a permanent magnet.

In this figure, eight magnetic disks are installed on a same rotation axis, as an example for realizing a large storage capacity.

The magnetic disk is formed with a high-quality surface having a surface roughness R_{MAX} of 10 nm or less, preferably of 5 nm or less.

The magnetic disk has a magnetic recording layer formed by a vacuum film formation method on the surface of a hard substrate.

A magnetic thin film is used for the magnetic recording layer.

Because the film thickness of the magnetic recording layer formed by the vacuum film formation method is 0.5 µm or less, the surface condition of the hard substrate is just reflected as that of the recording layer.

Accordingly, a surface having a surface roughness R_{MAX} of 10 nm or less is used for the hard substrate.

For such a hard substrate, glass, chemically strengthened soda-alumina silica glass or ceramic is used as a main component.

Moreover, in case of a magnetic layer made of metal or alloy, it is preferable to provide an oxide or nitride layer on the surface.

Moreover, use of a carbon protective coating is desirable, too. By forming the head in this way, the durability of the magnetic recording layer is improved, and damage of the magnetic disk may be prevented in case recording and reproduction is done with an extremely low floating slider, or with contact at start and stop.

Performance measurements (overwrite characteristic) taken with the above recording head have revealed that even in a radio frequency domain of 40 MHz or more, a superior recording performance of about -50 dB is obtained.

According to this embodiment, a high coercive force medium can be recorded fully even in the radio frequency domain, and an MR sensor of high sensitivity is provided, which has an excellent MR effect based on the anisotropy magnetoresistance effect, such as medium transfer rate 15 MB/s or greater, recording frequency of 45 MHz or more, high-speed transmitting of the data more than magnetic disk 4000 rpm, shortening of the access time, increase of the recording capacity. A magnetic disc unit with a surface recording density of 20 Gb/cm² (3 Gb/in²) or greater is thus provided.

According to the present invention as stated above, at least one part of the magnetic pole of the recording head is made of a high resistivity film, and as the recording performance is hard to fall in the radio frequency, a magnetic storage apparatus of high recording density is provided.

Furthermore, according to the present invention, a magnetic laminating body which has a sufficient coupling magnetic field and a high temperature stability may be obtained, so that a reproducing head which has a sufficient reproducing capacity and low noise characteristic, and a high density magnetic storage apparatus of high reliability may be provided.

## Claims

1. A thin-film magnetic head having an upper magnetic film (12, 13; 51, 52; 101, 107) and a lower magnetic film (11, 14; 51, 52; 103, 108) arranged on opposite sides of a non-magnetic gap membrane (4; 56; 102), at least an end part of said upper and/or lower magnetic film being constructed of at least a first magnetic membrane layer (13, 14; 51; 102, 103) adjacent said gap membrane (4, 56, 102) and a second magnetic membrane layer (11, 12; 52; 107, 108) farther away from said gap membrane (4; 56; 102), and having a different resistivity than said first layer,
**characterised** said second layer (11, 12; 52; 107, 108) has a greater width and a higher resistivity than said first layer (13, 14; 51; 102, 103).

2. The magnetic head of claim 1, wherein said second layer (11, 12; 52; 107, 108) has a smaller saturation flux density than said first layer (13, 14; 51; 102, 103).

3. The magnetic head of claim 1, wherein the resistivity of said second layer (11, 12; 52; 107, 108) is more than 50 µΩm.

4. A recording/reproducing separate type magnetic head having a recording head for writing information, a reproducing head for reading information, and a magnetic shield provided therebetween, wherein said recording head has the structure defined in any preceding claim.

5. The magnetic head of claim 4, wherein the reproducing head includes a ferromagnetic body and an antiferromagnetic body connected to said ferromagnetic body and having a unidirectional anisotropy, at least one part of said antiferromagnetic body being made of Cr-Mn alloy, and at least one part, connected to the antiferromagnetic substance, of said ferromagnetic body being made of Co or Co alloy.

6. A magnetic storage apparatus comprising
means for rotating a thin-film magnetic disk at a speed of more than 4000 rpm in recording and reproducing and a recording frequency is 45 MHz or more,
a recording/reproducing separate type magnetic head having a recording head as defined in claim 3 provided on a floating type slider for writing in information and a reproducing head for reading out information, and
means for supporting and transferring said floating type slider over said disk.

7. The apparatus of claim 6, wherein said recording/reproducing separate type magnetic head comprises a reproducing head including a ferromagnetic body and an antiferromagnetic body connected to said ferromagnetic body and having a unidirectional anisotropy, at least one part of said antiferromagnetic body being made of a Cr-Mn alloy, and at least one part, connected to the antiferromagnetic substance, of said ferromagnetic body being made of Co or a Co alloy.

## Patentansprüche

1. Dünnfilm-Magnetkopf mit einem oberen Magnetfilm (12, 13; 51, 52; 101, 107) und einem unteren Magnetfilm (11, 14; 51, 52; 103, 108), die auf entgegengesetzten Seiten einer nicht-magnetischen Spaltmembran (4; 56; 102) angeordnet sind, wobei mindestens ein Endabschnitt des oberen und/oder des unteren Magnetfilms aus mindestens einer der Spaltmembran (4, 56, 102) benachbarten ersten magnetischen Membranschicht (13, 14; 51; 102, 103) und einer von der Spaltmembran (4; 56; 102) weiter entfernten zweiten magnetischen Membranschicht (11, 12; 52; 107, 108), die einen anderen spezifischen Widerstand hat als die erste Schicht, aufgebaut ist,
**dadurch gekennzeichnet, daß** die zweite Schicht (11, 12; 52; 107, 108) eine größere Breite und einen höheren spezifischen Widerstand hat als die erste Schicht (13, 14; 51; 102, 103).

2. Magnetkopf nach Anspruch 1, wobei die zweite Schicht (11, 12; 52; 107, 108) eine geringere Sättigungs-Magnetflußdichte hat als die erste Schicht (13, 14; 51; 102, 103).

3. Magnetkopf nach Anspruch 1, wobei der spezifische Widerstand der zweiten Schicht (11, 12; 52; 107, 108) über 50 µΩcm liegt.

4. Magnetkopf für getrennte Aufzeichnung/Wiedergabe mit einem Aufzeichnungskopf zum Schreiben von Informationen, einem Wiedergabekopf zum Lesen von Informationen und einer dazwischen vorgesehenen magnetischen Abschirmung, wobei der Aufzeichnungskopf den in einem der vorhergehenden Ansprüche definierten Aufbau hat.

5. Magnetkopf nach Anspruch 4, wobei der Wiedergabekopf einen ferromagnetischen Körper und einen mit diesem verbundenen antiferromagnetischen Körper mit unidirektionaler Anisotropie umfaßt, wobei mindestens ein Teil des antiferromagnetischen Körpers aus einer Cr-Mn-Legierung besteht und mindestens ein mit der antiferromagnetischen Substanz verbundener Teil des ferromagnetischen Körpers aus Co oder einer Co-Legierung besteht.

6. Magnetspeichervorrichtung mit
einer Einrichtung zum Drehen einer Dünnfilm-Magnetplatte mit einer Drehzahl über 4000 Upm bei der Aufzeichnung und Wiedergabe und einer Aufzeichnungsfrequenz von 45 MHz oder darüber,
einem Magnetkopf für getrennte Aufzeichnung/Wiedergabe mit einem an einem schwimmenden Gleiter zum Aufzeichnen von Informationen angeordneten Aufzeichnungskopf gemäß Anspruch 3 und einem Wiedergabekopf zum Lesen von Informationen, und
einer Einrichtung zum Stützen und Verschieben des schwimmenden Gleiters über der Platte.

7. Vorrichtung nach Anspruch 6, wobei der Magnetkopf für getrennte Aufzeichnung/Wiedergabe einen Wiedergabekopf umfaßt, der einen ferromagnetischen Körper und einen mit diesem verbundenen antiferromagnetischen Körper mit unidirektionaler Anisotropie aufweist, wobei mindestens ein Teil des antiferromagnetischen Körpers aus einer Cr-Mn-Legierung und mindestens ein mit der antiferromagnetischen Substanz verbundener Teil des ferromagnetischen Körpers aus Co oder einer Co-Legierung besteht.

## Revendications

1. Tête magnétique de type à film mince ayant un film magnétique supérieur (12, 13 ; 51, 52 ; 101, 107) et un film magnétique inférieur (11, 14 ; 51, 52 ; 103, 108) agencés sur des côtés opposés d'une membrane d'entrefer non-magnétique (4 ; 56 ; 102), au moins une partie d'extrémité dudit film magnétique supérieur et/ou inférieur étant constituée d'au moins une première couche de membrane magnétique (13, 14 ; 51 ; 102, 103) adjacente à ladite membrane d'entrefer (4, 56, 102) et d'une seconde couche de membrane magnétique (11, 12 ; 52 ; 107, 108) plus éloignée de ladite membrane d'entrefer (4 ; 56 ; 102), et ayant une résistivité différente de celle de ladite première couche,
**caractérisée en ce que** ladite seconde couche (11, 12 ; 52 ; 107, 108) a une largeur plus importante et une résistivité supérieure à ladite première couche (13, 14 ; 51 ; 102, 103).

2. Tête magnétique selon la revendication 1, dans laquelle ladite seconde couche (11, 12 ; 52 ; 107, 108) a une densité de flux de saturation inférieure à celle de ladite première couche (13, 14 ; 51 ; 102, 103).

3. Tête magnétique selon la revendication 1, dans laquelle la résistivité de ladite seconde couche (11, 12 ; 52 ; 107, 108) est supérieure à 50 µΩcm.

4. Tête magnétique de type à enregistrement/lecture séparés ayant une tête d'enregistrement pour écrire des informations, une tête de lecture pour lire des informations, et un écran magnétique agencé entre elles, ladite tête d'enregistrement ayant la structure définie dans l'une quelconque des revendications précédentes.

5. Tête magnétique selon la revendication 4, dans laquelle la tête de lecture inclut un corps ferromagnétique et un corps antiferromagnétique connecté audit corps ferromagnétique et ayant une anisotropie unidirectionnelle, au moins une partie dudit corps antiferromagnétique étant constituée d'un alliage Cr-Mn, et au moins une partie, connectée à la substance antiferromagnétique, dudit corps ferromagnétique étant constituée de Co ou d'un alliage de Co.

6. Dispositif de mémorisation magnétique comportant
des moyens pour mettre en rotation un disque magnétique de type à film mince à une vitesse supérieure à 4000 tpm en enregistrement et en lecture et ayant une fréquence d'enregistrement de 45 MHz ou supérieure,
une tête magnétique de type à enregistrement/lecture séparés ayant une tête d'enregistrement telle que définie dans la revendication 3 agencée sur un curseur de type flottant pour écrire des informations dans celle-ci et une tête de lecture pour extraire des informations de celle-ci, et
des moyens pour supporter et transférer ledit curseur de type flottant sur ledit disque.

7. Dispositif selon la revendication 6, dans lequel ladite tête magnétique de type à enregistrement/lecture séparés comporte une tête de lecture incluant un corps ferromagnétique et un corps antiferromagnétique connecté audit corps ferromagnétique et ayant une anisotropie unidirectionnelle, au moins une partie dudit corps antiferromagnétique étant constituée d'un alliage Cr-Mn, et au moins une partie, connectée à la substance antiferromagnétique, dudit corps ferromagnétique étant constitué de Co ou d'un alliage de Co.
